# EUROPÄISCHE PATENTSCHRIFT

(11) **EP 0 717 068 B1**
(45) Veröffentlichungstag und Bekanntmachung des Hinweises auf die Patenterteilung: **28.04.1999**
(21) Anmeldenummer: 95118998.4
(22) Anmeldetag: 02.12.1995
(51) Int. Cl.: C08J 9/00

(54) **Verfahren zur Herstellung von Polyurethankaltschäumen**
Process for the preparation of polyurethane cold foams
Procédé de préparation de mousses à froid de polyuréthane

(30) Priorität: 16.12.1994 DE 4444898
(43) Veröffentlichungstag der Anmeldung: 19.06.1996
(73) Patentinhaber: Th. Goldschmidt AG, 45127 Essen (DE)
(72) Erfinder: Brüne-Fischer, Anette, Dr., D-45134 Essen (DE); Burkhart, Georg, Dr., D-45239 Essen (DE); Zellmer, Volker, Dr., D-46240 Bottrop (DE)

(56) Entgegenhaltungen:
- DE-C- 3 215 317
- US-A- 3 896 062
- US-A- 4 042 540
- US-A- 4 331 555

## Beschreibung

Die großtechnische Herstellung von Polyurethanweichschäumen unter Verwendung von Isocyanaten, Polyetherpolyolen, gegebenenfalls Vernetzern sowie sonstigen geeigneten Additiven ist seit langem bekannt und ist z. B. beschrieben in Becker/Braun, Kunststoff-Handbuch, Band 7, Polyurethane, Carl Hanser Verlag, München; Wien, 2. Auflage 1983.

Je nach Reaktivität der Rohstoffe unterscheidet man dabei zwischen Heißweichschäumen (im folgenden Heißschäume) und Kaltweichschäumen (im folgenden Kaltschäume), wobei sich die Begriffe von der Formverschäumung ableiten. So ist es bei der Herstellung von Heißschäumen nach dem Formverfahren aufgrund der geringen Reaktivität der Rohstoffe notwendig, den Schaum in der Form bei erhöhter Temperatur zur vollständigen Vernetzung auszuheizen; diese Schäume werden deshalb als Heißschäume bezeichnet.

Die Entwicklung hochreaktiver Polyetherpolyole und gegebenenfalls die zusätzliche Verwendung von Vernetzern ermöglichen es hingegen, die Herstellung des Schaumes in der Form aufgrund der raschen Aushärtung bei geringerer Wärmezufuhr durchzuführen. Derartige Schäume werden deshalb Kaltschäume genannt.

Neben der Formverschäumung ist es dabei auch möglich, die Verschäumung nach dem Blockverfahren durchzuführen, wofür sich die Begriffe Kalt- bzw. Heißschaum ebenfalls eingebürgert haben.

Aufgrund der verschiedenen Rohstoffbasen weisen Kaltschäume ganz typische physikalische Eigenschaften auf, die sie von Heißschäumen unterscheiden.

Die Kaltschäume besitzen:
(a) einen latexartigen Griff,
(b) eine gegenüber den konventionellen Heißschäumen erhöhte Elastizität, weshalb diese Schäume auch als ,,High Resilient Schäume" bezeichnet werden,
(c) eine vom Heißschaum unterschiedliche Stauchhärte-Charakteristik (höherer SAG-Faktor) und weisen damit bei Verwendung als Polstermaterial einen besseren Sitzkomfort auf (Möbelschaum),
(d) gute Dauergebrauchseigenschaften mit nur geringer Ermüdungstendenz, was insbesondere im Automobilbereich von großem Interesse ist,
(e) aufgrund ihres Schmelzverhaltens eine bessere Flammwidrigkeit als konventionelle Heißschäume,
(f) günstigere Energiebilanz und kürzere Standzeiten bei der Formverschäumung.

Im Detail wird zur Herstellung eines PU-Weichschaumes ein Gemisch aus Polyol, polyfunktionellem Isocyanat, Aminaktivator, Zinnkatalysator, Stabilisator, Treibmittel (entweder Wasser zur Bildung von CO₂ und/oder Zusatz von physikalischen Treibmitteln), gegebenenfalls unter Zugabe von Flammschutzmitteln, Vernetzern oder sonstigen üblichen Verarbeitungshilfsmitteln, umgesetzt.

Der entscheidende Unterschied zum Heißschaum besteht bei der Kaltschaumherstellung darin, daß zum einen hochreaktive Polyole und zusätzlich noch niedermolekulare Vernetzer eingesetzt werden, wobei die Funktion des Vernetzers auch durch höherfunktionelle Isocyanate (sogenanntes ,,crude MDI") übernommen werden kann. Somit kommt es bereits in der Expansionsphase (CO₂-Bildung aus -NCO und H₂O) des Schaumes zu der Reaktion der Isocyanatgruppen mit den Hydroxylgruppen. Diese schnelle Polyurethanreaktion führt über den Viskositätsanstieg zu einer relativ hohen Eigenstabilität des Schaumes während des Treibvorgangs.

Für den Kaltschaum werden demzufolge Stabilisatoren benötigt, die zur Kontrolle der Zellgröße und Zellgrößenverteilung sowie zur Randzonenstabilisierung beitragen, aber keine oder nur schwach stabilisierende Eigenschaften aufweisen. Weiterhin resultiert im Gegensatz zum Heißschaumverfahren beim Kaltschaum ein höherer Anteil geschlossener Zellen, die nach dem Entformen aufgedrückt werden müssen. Außerdem weist der Kaltschaum eine unregelmäßigere Zellstruktur und in der Regel gröbere Zellen als Heißschaum auf, was wesentlich zu seinen oben genannten Eigenschaften beiträgt.

Als Polyole werden hochreaktive Polyole eingesetzt. Dabei handelt es sich zum einen um trifunktionelle Polyole, die neben einem hohen Molekulargewicht von üblicherweise zwischen 4800 und 6500 g/Mol mindestens 70 % (bis zu 95 %) primäre Hydroxylgruppen aufweisen, so daß deren OH-Zahl zwischen 36 und 26 liegt. Diese Polyole sind bis zu 90 % aus Propylenoxid aufgebaut, enthalten aber fast ausschließlich Ethylenoxid-Endgruppen. Die primären OH-Gruppen sind weitaus reaktiver gegenüber den Isocyanatgruppen als die sekundären OH-Gruppen der für den Heißweichschaum eingesetzten Polyole. Deren OH-Zahlen liegen (bei Molekulargewichten zwischen 3000 und 4500) üblicherweise zwischen 56 und 42.

Die hochreaktiven Polyole erhält man durch Polyaddition von Propylenoxid bzw. Ethylenoxid an höherfunktionelle Verbindungen, wie Glycerin oder Trimethylolpropan, in Gegenwart von basischen Verbindungen.

Eine weitere Klasse von hochreaktiven Polyolen stellen die sogenannten Füllkörperpolyole dar. Neben den oben aufgeführten Kenndaten zeichnen sie sich dadurch aus, daß sie feste organische Füllstoffe bis zu einem Feststoffgehalt von 40 % oder mehr in disperser Verteilung enthalten. Man unterscheidet dabei:
A. Polymerpolyole: Dies sind hochreaktive Polyole, welche ein Copolymer auf der Basis Styrol/Acrylnitril dispergiert enthalten.
B. PHD-Polyole: Dies sind hochreaktive Polyole, welche Polyharnstoff ebenfalls in dispergierter Form enthalten.
C. PIPA-Polyole: Dies sind hochreaktive Polyole, welche ein Polyurethan (durch in situ-Reaktion eines Isocyanats mit einem Alkanolamin in einem konventionellen Polyol gebildet) in dispergierter Form enthalten.

Der Festkörperanteil, der je nach Anwendung bevorzugt zwischen 5 und 40 % liegt, ist für eine verbesserte Zellöffnung verantwortlich, so daß das Polyol insbesondere mit dem TDI kontrolliert verschäumbar wird und kein Schrumpfen der Schäume auftritt. Der Festkörper wirkt damit als wesentliche Prozeßhilfe. Eine weitere Funktion besteht darin, über den Feststoffanteil die Härte zu kontrollieren, denn höhere Festkörperanteile bewirken eine höhere Härte des Schaumes.

Die Formulierungen mit feststoffhaltigen Polyolen sind deutlich weniger eigenstabil und bedürfen daher neben der chemischen Stabilisierung durch die Vernetzungsreaktion zusätzlich einer physikalischen Stabilisierung.

Je nach Feststoffgehalt der Polyole werden diese alleine oder in Abmischung mit den oben genannten ungefüllten Polyolen eingesetzt.

Als Isocyanate werden sowohl TDI (2,4- und 2,6-Toluylendiisocyanat-Isomerengemisch) als auch MDI (4,4'-Diphenylmethandiisocyanat) verwendet. Das sogenannte "crude MDI" oder "polymere MDI" enthält neben dem 4,4'- auch die 2,4'- und 2,2'-Isomeren sowie höherkernige Produkte. Als "pure MDI" bezeichnet man einkernige Produkte aus überwiegend 2,4'- und 4,4'-Isomerengemischen bzw. deren Prepolymere.

Für Blockschäume und Formschäume werden häufig unterschiedliche Isocyanate eingesetzt. So wird als polyfunktionelles Isocyanat in Kaltblockschaumsystemen in der Regel reines TDI (verschiedene 2,4- und 2,6-Isomerengemische) in Kombination mit feststoffhaltigen Polyolen eingesetzt. Es kommen darüber hinaus auch modifizierte TDI-Typen in Kombination mit hochreaktiven ungefüllten Polyolen zum Einsatz. In den Patentschriften DE 25 07 161 und DE 26 03 498 ist auch die Verwendung von kristallinen Polyhydroxyverbindungen als Vernetzer bei der Blockverschäumung, in Kombination mit hochreaktiven ungefüllten Polyolen sowie TDI, trimerisiertem TDI oder auch TDI/MDI-Mischungen beschrieben. Reine MDI-Formulierungen werden hingegen bei der Herstellung von Kaltblockschäumen normalerweise nicht eingesetzt.

Die anfänglich für den Formschaum entwickelten Formulierungen auf Basis von reinem TDI hatten den Nachteil eines engen Verarbeitungsspiels. Jedoch gestatten Rezepturen auf der Basis von TDI 80-Abmischungen mit crude MDI (bis zu 20 % oder mehr) in Kombination mit Füllkörperpolyolen eine sichere Verschäumung. Auch Systeme auf der Basis von TDI mit crude MDI in Verhältnissen von üblicherweise 70 : 30 bis 40 : 60 in Kombination mit ungefüllten Polyolen sind heute allgemein gebräuchlich.

Man findet außerdem auch Formulierungen allein auf der Basis von MDI ohne Zumischung von TDI unter Verwendung von ungefüllten Polyolen. Dabei kann das Isomerenverhältnis 2,4'- und 4,4'-sowie das Monomer- zu Polymerverhältnis des Isocyanats in einem weiten Bereich variiert werden.

Als Aminaktivatoren werden bevorzugt tertiäre Amine, wie z. B. das überwiegend vernetzende, d. h. die Reaktion zwischen Isocyanat und Polyol katalysierende Triethylendiamin (TEDA) oder der überwiegend treibende, d. h. die Reaktion zwischen Isocyanat und Wasser katalysierende Bis(2-dimethylaminoethyl-)ether (BDE) eingesetzt. Viele Rezepturen beruhen auf einer Kombinationskatalyse dieser beiden Verbindungen. Es sind aber auch andere gängige Amine möglich; die Einsatzmenge liegt üblicherweise zwischen 0,05 und 0,2 Teilen, bezogen auf 100,0 Teile Polyol.

Als Vernetzer werden niedermolekulare, gegenüber Isocyanaten reaktive mehrfunktionelle Verbindungen bezeichnet. Geeignet sind Hydroxyl- oder Amin-terminierte Substanzen, wie z. B. Glycerin, Triethanolamin (TEOA), Diethanolamin (DEOA) und Trimethylolpropan. Die Einsatzkonzentration liegt üblicherweise zwischen 0,5 und 2,0 Teilen, bezogen auf 100,0 Teile Polyol je nach Formulierung, kann aber auch davon abweichen. Bei Verwendung von crude MDI bei der Formverschäumung übernimmt dies ebenfalls eine vernetzende Funktion. Der Gehalt an niedermolekularen Vernetzern kann daher bei steigender Menge an crude MDI entsprechend reduziert werden.

Die Polyurethanreaktion wird im allgemeinen durch die Zugabe von Zinnaktivatoren katalysiert. Verwendet wird entweder Dibutylzinndilaurat (DBTL) oder auch Zinn(II)octoat; die Einsatzmengen liegen üblicherweise zwischen 0,01 und 0,3 Teilen, bezogen auf 100,0 Teile Polyol, können aber auch davon abweichen.

Bei den Treibmitteln unterscheidet man chemische und physikalische Treibmittel. Zu den chemischen Treibmitteln gehört Wasser, dessen Reaktion mit den Isocyanatgruppen zur Bildung von CO₂ führt. Die Rohdichte des Schaumstoffes wird durch die zugegebene Wassermenge gesteuert, wobei die bevorzugten Einsatzmengen zwischen 1,5 und 4,0 Teilen, bezogen auf 100,0 Teile Polyol, liegen. Darüber hinaus können auch zusätzlich physikalische Treibmittel (z. B. Fluorchlorkohlenwasserstoffe, Methylenchlorid, Aceton, 1,1,1-Trichlorethan, etc.) eingesetzt werden.

Für die Herstellung von Kaltschaum werden außerdem Stabilisatoren benötigt, die zur Kontrolle der Zellgröße und Zellgrößenverteilung sowie Randzonenregulierung beitragen, aber im Vergleich zu Heißschaumstabilisatoren in der Regel nur schwach stabilisierende Eigenschaften aufweisen. Dabei unterscheiden sich die Anforderungen an die Stabilisatoren je nach Block- oder Formverschäumung:

Bei der Blockverschäumung ist neben der Schaumstabilisierung die notwendige Zellöffnung zum richtigen Zeitpunkt das eigentliche Problem. Ist die Polymerisationsreaktion bei Expansionsende so weit fortgeschritten, daß der Block bereits vollends chemisch stabilisiert wird, kann in der Regel das Öffnen nicht mehr durchgeführt werden. Der gesamte Block wird deshalb schrumpfen. Erfolgt die Zellöffnung zu frühzeitig, so führt das entweder zu einem Kollabieren des Schaumes oder bei relativ eigenstabilen Systemen zu einem Schaum, der einige Stunden nach seiner Herstellung einen Schrumpfprozeß erleiden kann. Mit Hilfe eines geeigneten Stabilisators läßt sich sowohl der Zeitpunkt als auch die Intensität der Zellöffnung kontrollieren. Außerdem soll der Stabilisator die Zellstruktur und insbesondere die Randzone (besonders wichtig im Formschaum) regulieren. Der Kaltschaum soll eine leicht vergröberte Zelle und eine unregelmäßige Zellstruktur aufweisen, so daß dessen besondere physikalische Eigenschaften erreicht werden.

Die Anforderungen an den Stabilisator für den Kaltblockschaum sind damit in erster Linie kontrollierte Schaumstabilisierung, Zellöffnung zum richtigen Zeitpunkt, Zellregulierung und Kontrolle der Zellgrößenverteilung.

Bei der Herstellung eines Formschaumkörpers treten zusätzliche Anforderungen auf. Das expandierende Reaktionsgemisch muß, um das ganze Formvolumen auszufüllen, relativ weite Fließwege überwinden. Der Reibungswiderstand an den Formwänden führt leicht zu einer Zerstörung ganzer Zellverbände, so daß unter der Schaumhaut Hohlräume entstehen. Dieses Fehlerbild tritt auch auf, wenn zur Verstärkung eingebrachte Einlegeteile umschäumt werden müssen. Eine weitere kritische Zone befindet sich im Bereich der Entlüftungsöffnungen. Strömt überschüssiges Treibgas mit zu hoher Geschwindigkeit an den Zellverbänden vorbei, führt dies zu partiell kollabierten Zonen.

Darüber hinaus wird die Beschaffenheit der Schaumhaut kritisch beurteilt.

Zusammenfassend werden also an einen Kaltformschaumstabilisator folgende Anforderungen gestellt: ausreichende Stabilisierung des Schaums, Stabilisierung gegenüber den Einflüssen von Scherkräften, Stabilisierung der Randzone und der Haut, Kontrolle der Zellgröße und der Zellgrößenverteilung sowie die Vermeidung einer erhöhten Geschlossenzelligkeit.

Allgemeine Anforderungen an einen Stabilisator sind darüber hinaus eine hohe Effektivität, d. h. er sollte schon mit geringen Einsatzkonzentrationen seine optimale Wirksamkeit entfalten. Weiterhin sollte sein Verarbeitungsspiel groß sein, d. h. daß der Konzentrationsbereich, in dem der Stabilisator eingesetzt werden kann, möglichst groß sein soll, so daß geringe Veränderungen in der Schaumrezeptur problemlos durchgeführt werden können.

Bei der Kaltschaumherstellung existieren somit aufgrund der Vielzahl an möglichen Rohstoffen sehr viele verschiedene Formulierungsvarianten. Dies führt dazu, daß die oben genannten Anforderungen an den Stabilisator stark systemabhängig sind. Demzufolge müssen spezielle Stabilisatoren für das jeweilige System entwickelt werden.

Grundsätzlich handelt es sich bei den typischen Kaltschaumstabilisatoren um Polymere auf Basis von Polysiloxanen, welche mehr oder weniger stark durch geeignete organische Gruppen modifiziert sind. Dabei sind die Kettenlängen der für den Kaltschaum geeigneten Polysiloxane im allgemeinen kürzer als die Kettenlängen der im Heißschaum eingesetzten Stabilisatoren.

Es stehen mehrere Möglichkeiten und Bausteine zur Verfügung, um die Struktur des Stabilisators den jeweiligen Anforderungen anzupassen.

Nach dem derzeitigen Stand der Technik werden im wesentlichen zwei Gruppen von Kaltschaumstabilisatoren eingesetzt:

In eigenstabilen Systemen werden insbesondere die unmodifizierten Siloxane angewendet. Hierzu sind insbesondere die DE-PS 25 33 074 und die DE-OS 22 21 811 zu nennen.

In Formulierungen, in denen zusätzlich eine reale physikalische Stabilisierung gefordert wird (z. B. Rezepturen auf der Basis von Füllkörperpolyolen), haben demgegenüber organomodifizierte Siloxane die größere Bedeutung. Geeignete Polysiloxan-Polyoxyalkylen-Copolymerisate sind zum Beispiel in den US-PSen 3 741 917 und 4 031 044 beschrieben. Andere geeignete organomodifizierte Siloxane sind der Tabelle zu entnehmen:

| ***Modifizierende Gruppe*** | ***Literaturstelle*** |
|---|---|
| Cyanoalkyl- | US-PS 3 952 038 |
| Cyanoalkoxyalkyl- | DE-AS 24 02 690 |
| Sulfolanyloxyalkyl- | US-PS 4 110 272 |
| Morpholinoalkoxyalkyl- | US-PS 4 067 828 |
| tert. Hydroxyalkyl- | US-PS 4 039 490 |
| Chlorpropyl- | DE-PS 36 26 297 |
| Chlormethyl- | DE-OS 27 36 138 |
| lineare Alkyl- | EP-PS 0 037 067 |
| verzweigte Alkyl- | EP-PS 0 243 131 |
| Aralkyl- | DE-PS 23 56 443 |

Trotz dieser Vielzahl von Stabilisatoren gelingt es nicht, alle anwendungstechnischen Anforderungen zu erfüllen. Bisher sind keine Stabilisatoren bekannt, die universell in allen Kaltschaumsystemen einsetzbar sind. Eine besondere Herausforderung besteht darüber hinaus in der Problematik, die Balance zwischen der Ausbildung eines stabilen, aber gleichzeitig sehr offenzelligen Schaumes zu finden. Hinzu kommt, daß immer wieder neue, bisher noch nicht bekannte Problemstellungen auftauchen, deren Lösung mit den bekannten Stabilisatoren des Standes der Technik nicht oder nur unvollständig gelingt.

Die vorliegende Erfindung befaßt sich daher mit der Aufgabe, neue Stabilisatoren für die Herstellung von Polyurethankaltschäumen aufzufinden, die in der Lage sind, bereits bekannte Probleme besser oder neue Probleme erstmalig zu lösen.

Ein Problem der im Automobilbereich eingesetzten Kaltschäume besteht darin, daß sie zum unerwünschten Fogging beitragen. Als Fogging wird die Bildung eines lichtstreuenden Niederschlags auf den inneren Oberflächen der Automobilverglasung bezeichnet. Die primäre Quelle dieses Niederschlags sind flüchtige Bestandteile der zur Fahrzeuginnenausstattung verwendeten Polymerwerkstoffe, die wegen der Temperaturverhältnisse im Fahrzeug ausgasen und an den relativ kälteren Glasoberflächen kondensieren. Die Automobilindustrie ist deshalb daran interessiert, derartige Foggingniederschläge so weit wie möglich zu reduzieren.

Ursache für die Foggingniederschläge, soweit sie durch den Kaltschaum verursacht werden, sind die im Kaltschaum enthaltenen Anteile an leichtflüchtigen Bestandteilen. Ein nicht unerheblicher Teil der leichtflüchtigen Bestandteile rührt vom Stabilisator her. Sie sind herstellungsbedingt in jeder Stabilsatormischung enthalten.

Ein Ziel der vorliegenden Erfindung besteht deshalb in der Neuentwicklung von Stabilisatoren, bei denen diese Anteile reduziert oder ganz eliminiert sind.

Darüber hinaus befaßt sich die vorliegende Erfindung ganz allgemein mit dem Problem, Stabilisatoren mit verbesserten Eigenschaften zu entwickeln. Zu diesen Eigenschaften zählen insbesondere:

Erzielung verbesserter Offenzelligkeit der Schäume und damit besseres Aufdrückverhalten bei gleichzeitig ausreichender Stabilisierung, höhere Effektivität, breiteres Verarbeitungsspiel, bessere Hautbeschaffenheit der Formschäume, universell sowohl für Block- als auch Formschaumsysteme einsetzbare Produkte.

Gegenstand der Erfindung ist somit ein Verfahren zur Herstellung von Polyurethankaltschäumen durch Umsetzung eines Gemisches aus hochreaktiven Polyolen, welche üblicherweise ein mittleres Molekulargewicht zwischen etwa 4800 und 6500 g/Mol und mindestens 70 % primäre Hydroxylgruppen aufweisen und gegebenenfalls Füllstoffe enthalten, polyfunktionellen Isocyanaten, Aminaktivatoren, Vernetzern, Zinnkatalysatoren, Treibmitteln und Stabilisatoren, welches dadurch gekennzeichnet ist, daß man als Stabilisatoren Verbindungen der allgemeinen Formel 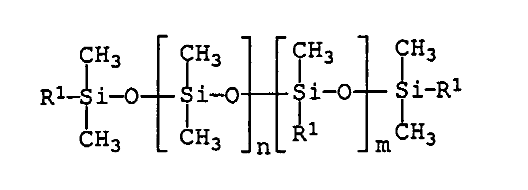 in der
- R¹: im durchschnittlichen Molekül gleich oder verschieden ist und die Bedeutung eines Methylrestes oder eines Restes der allgemeinen Formel -CH₂-CH₂-(CH₂)ₐ-C₆H₃(R²)₂ (a = 0 oder 1; R² = -O-CH₃) hat, mit der Maßgabe, daß mindestens 1 Rest R¹ ein Rest der Formel -CH₂-CH₂-(CH₂)ₐ-C₆H₃(R²)₂ ist,
- n: einen mittleren Zahlenwert von 2 bis 11 hat,
- m: einen mittleren Zahlenwert von 1 bis 6 hat,
mit der Maßgabe, daß der Quotient p = (n + m + 2)/m 1,66 bis 12 ist,
verwendet.

Die beim erfindungsgemäßen Verfahren zu verwendenden Stabilisatoren können gegenüber Stabilisatoren des Standes der Technik in verringerter Konzentration eingesetzt werden. Damit verbunden ist ein deutlich verringertes Foggingverhalten der Stabilisatoren. Der Grad der Offenzelligkeit, gemessen als Aufdrückkraft, ist bei den erfindungsgemäß hergestellten Schäumen erhöht, so daß dadurch eine deutlich verminderte Tendenz zum Schrumpf der erhaltenen Schäume resultiert. Es zeigt sich insbesondere, daß die beim erfindungsgemäßen Verfahren zu verwendenden Polysiloxane eine weitaus verbesserte Ausgewogenheit zwischen stabilisierenden und zellöffnenden Eigenschaften aufweisen. Außerdem werden Hautstörungen vermieden, wobei gleichzeitig eine gute Regulierung des Randzonenbereiches zu beobachten ist.

Darüber hinaus ist es mit den erfindungsgemäßen Stabilisatoren möglich, nur durch Veränderung der oben genannten Variablen a, n und m einen geeigneten Stabilisator für alle Kaltschaumsysteme herzustellen, was mit den Stabilisatoren des Standes der Technik nicht möglich ist. Bisher mußte ein für jedes Kaltschaumsystem angepaßter Stabilisator bzw. Kombinationen von Stabilisatoren unterschiedlicher Verbindungsklassen eingesetzt werden, um einen fehlerfreien Schaum zu erhalten.

Es handelt sich damit bei den erfindungsgemäßen Stabilisatoren um eine neuartige Klasse universeller Stabilisatoren, die sowohl für den Kaltblock- als auch den Kaltformschaum, für Systeme auf der Basis rein TDI, TDI/MDI-Mischungen und rein MDI in Kombination mit den entsprechenden Polyolen einsetzbar sind.

Besonders bevorzugt ist ein erfindungsgemäßes Verfahren, bei welchem man als Stabilisatoren Verbindungen verwendet, welche frei von Polysiloxanen einer Kettenlänge von < 5 und > 16 sind. Die Fraktionierung der Polysiloxane erfolgt zweckmäßig entsprechend dem Stand der Technik vor der Einführung der Gruppe(n) R¹.

Verwendet man derartige fraktionierte Polysiloxane der Formel I, deren Zusammensetzung somit von einer statistischen Verteilung der Polysiloxane unterschiedlicher Kettenlänge, wie sie durch Äquilibrierung üblicherweise erhalten werden, abweicht, in Kaltschaumsystemen, zeigen die fraktionierten Siloxane gegenüber den äquilibrierten Siloxanen folgende besonderen Vorteile:

Die Stabilisatoren besitzen ein breiteres Verarbeitungsspiel. Man erzielt eine gute Stabilisierung bei gleichzeitig verbesserter Offenzelligkeit des Schaumes und erhält besonders in Formschaumsystemen Schäume mit sehr guter Hautbeschaffenheit. Gleichzeitig wird die Zellregulierung verbessert.

Durch die Abtrennung der langkettigen Siloxane sind die Tendenzen zum Schrumpf und zur Entschäumung weitaus geringer.

Durch die Abtrennung der kurzkettigen Siloxane wird ein besseres Foggingverhalten der Schäume erreicht.

Die überlegenen Eigenschaften der erfindungsgemäßen organofunktionell modifizierten Polysiloxane der Formel I werden durch die folgenden Beispiele belegt. Die Mengenangaben erfolgen in Gewichtsteilen.

### I. Verwendung äquilibrierter organofunktionell modifizierter Polysiloxane

### Beispiel 1

Als Stabilisator wird ein Siloxan der Formel I mit den Indices a = 1; n = 4 ; m = 2; p = 4 verwendet.

Die Überprüfung erfolgt mittels einer typischen Blockschaumrezeptur auf der Basis füllkörperhaltiger Polyole und reinem TDI. Das Siloxan wird in unterschiedlichen Konzentrationen eingesetzt. Die Ergebnisse werden mit einem für diesen Schaumtyp bevorzugten Stabilisator des Standes der Technik verglichen. Es handelt sich dabei um ein Polysiloxan, welches als modifizierende Gruppen Chlorpropylgruppen gemäß DE-PS 36 26 297 aufweist.

| ***Rohstoff*** | ***Anteile*** |
|---|---|
| Polymerpolyol | 100,00 |
| Wasser | 3,50 |
| Diethanolamin | 1,00 |
| Bis(2-dimethylaminoethyl-)ether | 0,05 |
| Triethanolamin | 0,15 |
| Dibutylzinndilaurat | 0,15 |
| TDI | 41,00 |
| Stabilisator | 0,2 - 1,5 |
| Index 〈100〉 | |

Der Index 100 bedeutet, daß die eingesetzte Menge an Isocyanatgruppen gleich ist der stöchiometrisch berechneten Menge an Isocyanatgruppen, die für die Umsetzung mit dem Wasser und den OH-Gruppen der Polyole benötigt werden.

Mit dem Vergleichsprodukt des Standes der Technik wird bei einer Mindest-Einsatzkonzentration von 0,6 Teilen ein Schaum erhalten, der eine gute Zellgrößen- und Randzonenregulierung aufweist, offenzellig ist und keinen Schrumpf zeigt. In der Bodenzone treten jedoch starke Abheber auf, die auf eine unvollständige Zellöffnung hinweisen.

Mit einer Einsatzkonzentration von nur 0,2 Teilen des erfindungsgemäßen Siloxans werden Schäume erhalten, die gegenüber dem Standard-Schaum folgende Vorteile aufweisen:

Es findet eine bessere Zellöffnung statt, so daß kaum noch Abheber in der Bodenzone auftreten. Es wird eine gröbere Zellstruktur erreicht, was für die physikalischen Eigenschaften von Vorteil ist.

Die Verwendung eines unmodifizierten Polydimethylsiloxans gemäß DE-PS 25 33 074 führt in dieser Formulierung zu einem Kollaps des Schaumes.

### Beispiel 2

Als Stabilisator wird ein Siloxan der Formel I mit den Indices a = 1; n = 4; m = 3; p = 3 verwendet.

Die Überprüfung erfolgt mittels einer typischen Formschaumrezeptur auf der Basis füllstoffhaltiger Polyole und reinem TDI. Das Siloxan wird in unterschiedlichen Konzentrationen eingesetzt. Die Ergebnisse werden mit einem für diesen Schaumtyp bevorzugten Stabilisator des Standes der Technik verglichen. Eshandelt sich dabei um ein Polysiloxan, welches als modifizierende Gruppen Polyethergruppen gemäß EP-PS 0 106 101 aufweist.

| ***Rohstoff*** | ***Anteile*** |
|---|---|
| PHD-Polyol | 100,00 |
| Wasser | 4,00 |
| Diethanolamin | 1,50 |
| Triethylendiamin | 0,50 |
| Bis(2-dimethylaminoethyl-)ether | 0,07 |
| TDI | 47,90 |
| Stabilisator | 0,1 - 1,5 |
| Index 〈100〉 | |

Beide Produkte werden in unterschiedlichen Konzentrationen eingesetzt. Mit dem Stabilisator des Standes der Technik kann in keinem Versuch ein fehlerfreier Schaum hergestellt werden. Entweder weisen die Randzonenbereiche Störungen auf (bei niedrigen Einsatzkonzentrationen) oder es tritt bei höheren Einsatzmengen Schrumpf des Schaumes auf. Auch die Hautbeschaffenheit ist fehlerhaft. Diese Fehler können nur unter der zusätzlichen Verwendung von unmodifizierten Polydimethylsiloxanen behoben werden. Der Nachteil ist dabei die für die Handhabung in der Praxis ungünstigere Verwendung von zwei Komponenten und die Tatsache, daß aufgrund des notwendigen Einsatzes der zur Flüchtigkeit neigenden unmodifizierten Polydimethylsiloxane ein ungünstiges Foggingverhalten resultiert (s. Beispiel 3).

Das erfindungsgemäße Produkt ist in allen Beurteilungskriterien überlegen:

Man erhält mit einer Einsatzkonzentration von nur 0,1 Teilen einen sehr offenzelligen Schaum. Die Aufdrückwerte (Eindrückhärte in [N] bei 50 % Stauchung, gemessen unmittelbar nach der Entformung des Schaumes) liegen bei Verwendung des erfindungsgemäßen Stabilisators niedriger als die des Stabilisators des Standes der Technik, auch wenn dieser in Kombination mit einem unmodifizierten Siloxan eingesetzt wird. Zusätzlich ist festzustellen, daß die Randzonen sehr gut reguliert sind. Die Haut des erhaltenen Schaumes zeigt keinerlei Störungen. Aufgrund der hohen Offenzelligkeit ist keine Tendenz zum Schrumpf vorhanden.

Folgende Tabelle veranschaulicht die Ergebnisse:

| Produkt | Mindest-Einsatzkonz./Tle | Randzone | Haut | Schrumpf | 1. ADW/N |
|---|---|---|---|---|---|
| erf.-gemäß | 0,1 | io | io | io | 367 |
| | | | | | |
| Vergleich | 0,6 | io | sl | 1 | 970 |
| | | | | | |
| Vergleich + unmod. PDMS (3:2) | 0,4 | io | io | io | 476 |

Die Abkürzungen bedeuten:
- io:: in Ordnung
- sl:: sehr leicht gestört
- l:: leicht gestört
- 1. ADW:: 1. Aufdrückwert bei Bestimmung der Eindrückhärte

Die Verwendung eines unmodifizierten Polydimethylsiloxans gemäß DE-PS 25 33 074 allein in dieser Rezeptur führt zu starken Entschäumungen innerhalb des Schaumkissens und ist daher nicht möglich.

### II. Verwendung fraktionierter organofunktionell modifizierter Polysiloxane.

### Beispiel 3

Als Stabilisator wird ein Siloxan der Formel I mit den Indices a = 1; n = 6; m = 1; p = 9 verwendet. Der Stabilisator ist frei von Polysiloxanen einer Kettenlänge von ≤ 5 und ≥ 16.

Die Überprüfung erfolgt mittels einer typischen Kaltformschaumrezeptur. Diese beruht auf einem konventionellen (ungefüllten) Polyol und einer TDI/crude MDI-Mischung als Isocyanat-Komponente. Entsprechend dem Stand der Technik konnten als Stabilisatoren in solchen Formulierungen nur unmodifizierte Polydimethylsiloxane verwendet werden.

| ***Rohstoff*** | ***Anteile*** |
|---|---|
| konv. Polyol | 100,00 |
| Wasser | 3,00 |
| Triethylendiamin | 0,60 |
| Dimethylethanolamin | 0,20 |
| Triethanolamin | 2,00 |
| 40% crude MDI/60% TDI | 46,20 |
| Stabilisator | 0,1 - 1,0 |
| Index 〈100〉 | |

Bei Verwendung unmodifizierter Siloxane als Stabilisatoren gemäß DE-PS 25 33 074 bei einer Mindest-Konzentration von 0,6 Teilen erhält man einen fehlerfreien Schaum. Bei Verdoppelung der Einsatzkonzentration kommt es zu einem starken Schrumpf des Schaumes.

Das mit fraktionierten modifizierten Organopolysiloxan durchgeführte erfindungsgemäße Verfahren erlaubt die Verwendung der Stabilisatoren in einem weiteren Konzentrationsbereich von 0,1 bis 1,2 Teilen. Man erhält grundsätzlich offenere, nicht schrumpfende, sehr gut regulierte Schäume, auch bei sehr hohen Einsatzkonzentrationen. Ein besonderer Vorteil dieser beim erfindungsgemäßen Verfahren eingesetzten fraktionierten Produkte liegt damit in ihrem breiten Verarbeitungsspiel, was in den im folgenden aufgeführten Aufdrückkräften zum Ausdruck kommt:

| Produkt | Einsatz-konz./Tle | 1. ADW/N |
|---|---|---|
| erf.-gemäß | 0,1 | 625 |
| | 0,6 | 705 |
| | 1,2 | 808 |
| | | |
| Vergleich | 0,1 | keine Randzonenregulierung |
| | 0,6 | 879 |
| | 1,2 | starker Schrumpf |

Darüber hinaus weisen die erfindungsgemäßen Schäume die geforderte Verringerung des Foggingverhaltens auf, was die nach DIN 75201B bestimmten Foggingwerte (bei Einsatz konzentrationen von 0,6 Teilen in beiden Fällen) verdeutlichen:

| | |
|---|---|
| Foggingwert Vergleich | 2,7 mg |
| Foggingwert erfindungsgemäß | 1,1 mg |

Dem Stand der Technik entsprechend war es bisher nicht möglich, organomodifizierte Siloxane in diesen Formschaumsystemen erfolgreich einzusetzen, denn dies resultiert aufgrund der Überstabilisierung in einem starken Schrumpf der Schäume.

### Beispiel 4

Als Stabilisator wird ein Siloxan der Formel I mit den Indices a = 1; n = 5; m = 1; p = 8 verwendet. Der Stabilisator ist frei von Polysiloxanen einer Kettenlänge von ≤ 5 und ≥ 16.

Die Überprüfung erfolgt mit einer Füllkörperpolyol/TDI-Formschaumrezeptur. Als Vergleich dient ein mit Chloralkylgruppen modifizierter Stabilisator des Standes der Technik gemäß DE-PS 36 26 297.

Weiterhin dient hier zum Vergleich ein Stabilisator mit den o. g. Indices auf der Basis äquilibrierter organofunktionell modifizierter Siloxane.

| ***Rohstoff*** | ***Anteile*** |
|---|---|
| PHD-Polyol | 100,00 |
| Wasser | 4,00 |
| Diethanolamin | 1,50 |
| Triethylendiamin | 0,50 |
| Bis(2-dimethylaminoethyl-)ether | 0,07 |
| TDI | 47,90 |
| Stabilisator | 0,1 - 1,5 |
| Index 〈100〉 | |

Es werden folgende Ergebnisse erhalten:

| Produkt | Einsatzkonz./Tle | Randzone | Haut | Schrumpf | 1. ADW/N |
|---|---|---|---|---|---|
| erf.-gemäß fraktion. | 0,1 | io | io | io | 323 |
| | 0,6 | io | io | io | 455 |
| | 1,0 | io | io | io | 531 |
| erf.-gemäß äquilibr. | 0,1 | io | io | io | 644 |
| | 0,6 | io | io | sl | 958 |
| | 1,0 | io | io | 1 | 1230 |
| Vergleich | 0,1 | io | io | sl | 687 |
| | 0,6 | io | 1 | 1 | 1045 |
| | 1,0 | sehr starker Schrumpf | | | |

Die Abkürzungen bedeuten:
- io:: in Ordnung
- sl:: sehr leicht gestört
- l:: leicht gestört
- 1. ADW:: 1. Aufdrückwert bei Bestimmung der Eindrückhärte

Es zeigt sich, daß mit dem beim erfindungsgemäßen Verfahren verwendeten Stabilisator auf der Basis fraktionierter Siloxane in einem weiten Konzentrationsbereich ein fehlerfreier, gut regulierter Schaum erhalten wird. Die herausragenden Vorteile gegenüber dem Vergleichsprodukt des Standes der Technik sind ein breiteres Verarbeitungsspiel bei guter Effektivität, hervorragende Offenzelligkeit, selbst bei hohen Einsatzkonzentrationen, keine Tendenz zum Schrumpf und besonders gute Hautbeschaffenheit.

Im Vergleich zu dem Stabilisator auf Basis äquilibrierter Siloxane zeigt sich der besondere Vorteil im Hinblick auf das breite Verarbeitungsspiel. Besonders die Tendenz zum Schrumpf wird durch die Abtrennung der langkettigen Siloxane weitaus geringer.

Allgemein zeigt sich, daß die beim erfindungsgemäßen Verfahren zu verwendenden Stabilisatoren eine neue Verbindungsklasse mit überlegenen Eigenschaften darstellen. Im Gegensatz zu den Stabilisatoren des Standes der Technik sind die erfindungsgemäßen Stabilisatoren universell sowohl in Kaltblock- als auch in Kaltformschaumsystemen, in Formulierungen auf Basis rein TDI, TDI/MDI-Gemischen als auch rein MDI in Kombination mit den entsprechenden Polyolen einsetzbar.

Bisher war unumgänglich, für jedes Kaltschaumsystem jeweils auf das System angepaßte Stabilisatoren verschiedener Verbindungsklassen einzusetzen bzw. Kombinationen von Stabilisatoren unterschiedlicher Art zu verwenden.

Die besondere Eigenschaft der erfindungsgemäßen Stabilisatoren besteht darüber hinaus in der hervorragenden Balance zwischen ausreichender Stabilisierung und gleichzeitig hoher Offenzelligkeit der Kaltschäume. Sie besitzen ein breites Verarbeitungsspiel und führen zu Schäumen mit besonders guter Hautbeschaffenheit.

Sie zeichnen sich darüber hinaus durch eine hohe Effektivität aus, daß neben der ihnen eigenen geringeren Flüchtigkeit durch zusätzlich geringere Einsatzmengen ein deutlich reduziertes Foggingverhalten der Schäume resultiert. Die Stabilisatoren können auch in Kombinationen mit unmodifizierten Siloxanen eingesetzt werden.

## Patentansprüche

1. Verfahren zur Herstellung von Polyurethankaltschäumen durch Umsetzung eines Gemisches aus hochreaktiven Polyolen, welche ein mittleres Molekulargewicht zwischen 4800 und 6500 g/Mol und mindestens 70 % primäre Hydroxylgruppen aufweisen und gegebenenfalls Füllstoffe enthalten, polyfunktionellen Isocyanaten, Aminaktivatoren, Vernetzern, Zinnkatalysatoren, Treibmitteln und Stabilisatoren, dadurch gekennzeichnet, daß man als Stabilisatoren Verbindungen der allgemeinen Formel 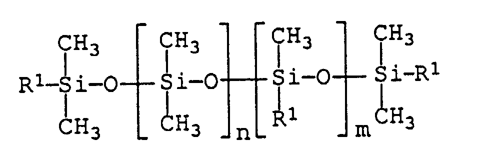 in der
R¹ im durchschnittlichen Molekül gleich oder verschieden ist und die Bedeutung eines Methylrestes oder eines Restes der allgemeinen Formel 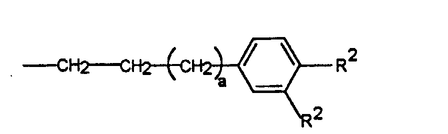 (a = 0 oder 1; R² = -O-CH₃) hat, mit der Maßgabe, daß mindestens 1 Rest R¹ ein Rest der Formel 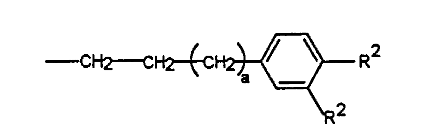 ist,
n einen mittleren Zahlenwert von 2 bis 11 hat,
m einen mittleren Zahlenwert von 1 bis 6 hat,
mit der Maßgabe, daß der Quotient p = (n + m + 2)/m 1,66 bis 12 ist,
verwendet.

2. Verfahren nach Anspruch 1, dadurch gekennzeichnet, daß man als Stabilisatoren Verbindungen verwendet, welche frei von Polysiloxanen einer Kettenlänge von ≤ 5 und ≥ 16 sind.

## Claims

1. Process for producing cold-cure polyurethane foams by reacting a mixture of highly reactive polyols which have a mean molecular weight of from 4800 to 6500 g/mol and at least 70 % primary hydroxyl groups and may contain fillers, plus polyfunctional isocyanates, amine activators, crosslinkers, tin catalysts, blowing agents and stabilizers, characterized in that the stabilizers used are compounds of the general formula 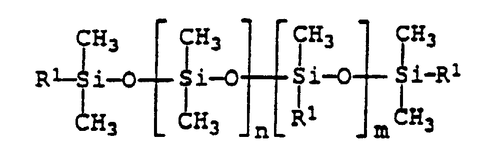 where
R¹ are identical or different in the average molecule and are each a methyl radical or a radical of the general formula 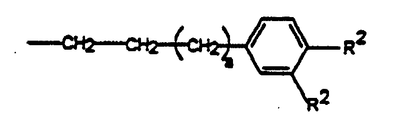 (a = 0 or 1; R² = -O-CH₃), with the proviso that at least 1 radical R¹ is a radical of the formula 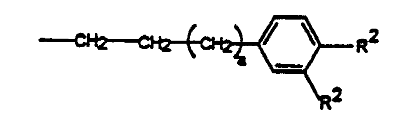
n has a mean value of from 2 to 11,
m has a mean value of from 1 to 6,
with the proviso that the quotient p = (n + m + 2)/m is from 1.66 to 12.

2. Process according to Claim 1, characterized in that the stabilizers used are compounds which are free of polysiloxanes having a chain length of ≤ 5 and ≥ 16.

## Revendications

1. Procédé de préparation de mousses à froid de polyuréthannes par réaction d'un mélange de polyols hautement réactifs, qui présentent un poids moléculaire moyen entre 4800 et 6500 g/mole et au moins 70% de groupements hydroxyle primaires et qui contiennent éventuellement des charges, des isocyanates polyfonctionnels, des activateurs aminés, des agents de réticulation, des catalyseurs d'étain, des agents moussants et des stabilisants, caractérisé en ce qu'on utilise comme stabilisants des composés de formule générale 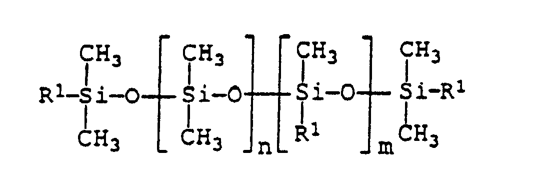 dans laquelle
R¹ est identique ou différent dans la molécule moyenne et signifie un radical méthyle ou un radical de formule générale 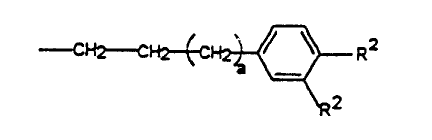 (a = 0 ou 1, R² = -O-CH₃) à condition qu'au moins un radical R¹ soit un radical de formule 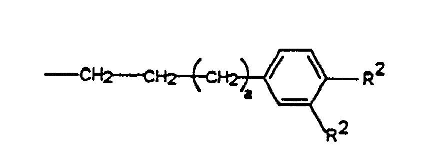
que n ait une valeur numérique moyenne de 2 à 11,
que m ait une valeur numérique moyenne de 1 à 6,
à condition que le quotient p = (n + m 2)/m soit de 1,66 à 12.

2. Procédé selon la revendication 1, caractérisé en ce qu'on utilise comme stabilisants des composés qui sont exempts de polysiloxanes d'une longueur de chaîne de ≤ 5 et de ≥ 16.
